# EUROPÄISCHE PATENTSCHRIFT

(11) **EP 3 159 227 B1**
(45) Veröffentlichungstag und Bekanntmachung des Hinweises auf die Patenterteilung: **05.09.2018**
(21) Anmeldenummer: 16466012.8
(22) Anmeldetag: 12.10.2016
(51) Int. Cl.: B60S 1/52, B60Q 3/30

(54) **VORRICHTUNG ZUR BELEUCHTUNG EINES FAHRZEUGMOTORRAUMES**
DEVICE FOR ILLUMINATING A VEHICLE MOTOR ROOM
DISPOSITIF D'ÉCLAIRAGE D'UN COMPARTIMENT MOTEUR D'UN VÉHICULE AUTOMOBILE

(30) Priorität: 13.10.2015 CZ 20150727
(43) Veröffentlichungstag der Anmeldung: 26.04.2017
(73) Patentinhaber: Skoda Auto a.s., 29301 Mladá Boleslav (CZ)
(72) Erfinder: Hejna, Petr, 29501 Mnichovo Hradiste (CZ)

(56) Entgegenhaltungen:
- DE-A1- 10 031 445
- DE-A1- 19 501 210
- DE-A1-102008 061 475

## Beschreibung

### Technisches Gebiet

Die Erfindung betrifft eine Vorrichtung zur Beleuchtung eines Fahrzeugmotorraumes, die an der Innenseite einer Motorhaube angeordnet ist.

### Bisheriger Stand der Technik

Derzeit gehört zur Standardausstattung der Kraftfahrzeuge die Beleuchtung des Innenraumes sowie des Kofferraumes, als Komfortausstattung wird die Beleuchtung des Fußbereiches und Türeinstiegsbereiches (Schweller) und dekorative Innenbeleuchtung angeboten, z.B. der Schalttafel, welche eine Orientierung unter verschlechterten Lichtbedingungen ermöglichen und zur Unterstreichung des Nachtdesigns des Fahrzeuges beitragen. Kommt jedoch eine Situation vor, dass im Motorraum irgendwelche Tätigkeiten durchgeführt werden sollen, gerät man in eine konträre Lage, da die meisten Kraftfahrzeuge derzeit mit keinen Einrichtungen zur Motorraumbeleuchtung ausgestattet sind. Die Abwesenheit der Motorraumbeleuchtung bedeutet unter verschlechterten Lichtbedingungen, eventuell in Dunkelheit, eine deutliche Einschränkung oder sogar Verhinderung der Durchführung von üblichen betriebsbedingten Arbeiten, wie z.B. das Nachfüllen des Wischwasserbehälters, den Austausch von fehlerhaften Lampen, die Kontrolle des Öl- oder Kühlflüssigkeitsstandes, der Elektrosicherungen und die Hilfe beim Starten mit Startkabeln. Gewisse Lösung dieser Aufgabe stellt die Nutzung von separaten, ab Werk verbauten oder nachgerüsteten elektrischen Leuchteinheiten dar. Aus der Patentschrift DE 200 23 303 U1 ist die Lösung bekannt, wo an der Innenseite der Motorhaube ein Beleuchtungskörper angebracht ist, der beweglich in den an den Seitenrändern der Motorhaube ausgebildeten Führungsschienen angeordnet ist. Der Nachteil liegt darin, dass diese Lösung zusätzliche Befestigungselemente, die Anpassung der großen Bauteile und der Presswerkzeuge (bei der Frontklappe), zusätzliche elektrische Leitungen mit Kabelschutz und Durchgangstüllen, zusätzliche Anschlüsse an die Schaltkontakte u.ä. erfordert. DE-A-102008061475 offenbart ein Modul einer Frontscheibenwischeranlage.

### Darstellung der Erfindung

Die Aufgabe wird durch eine Vorrichtung zur Beleuchtung eines Fahrzeugmotorraumes gelöst, die aus einem an der Innenseite einer Motorhaube angeordneten und einer Frontscheibe anliegenden Modul der Frontscheibenwaschanlage besteht, das ein Düsengehäuse mit Waschwasseranschluss und Scheibenwaschdüse umfasst, wo in dem Düsengehäuse ein elektrisches Heizelement der Düse sowie ein elektronisches Element angeordnet sind, die über einen Stromleiter an das Zentralsteuergerät des Fahrzeuges angeschlossen sind. Die Darstellung der Erfindung liegt darin, dass im Modul der Frontscheibenwaschanlage ein Beleuchtungselement angeordnet ist.

Die Darstellung liegt ebenfalls darin, dass das Beleuchtungselement über ein elektronisches Element und Stromleiter an ein Zentralsteuergerät des Fahrzeuges angeschlossen ist, womit eine intelligente Steuerung sowohl der Beheizung, wie auch der Beleuchtung ermöglicht wird.

Als Beleuchtungselement wird vorteilhaft eine LED-Lichtquelle verwendet.

Um die Leuchtfunktion zu stabilisieren, weist das Beleuchtungselement auch ein elektrisches Heizelement und elektronisches Element auf.

Ferner liegt dieser Lösung zugrunde, dass die im elektronischen Element sowie im Beleuchtungselement natürlich entstandene Abwärme zur Beheizung der Scheibenwaschdüse beiträgt.

Der Vorteil dieser konstruktiven Anordnung liegt darin, dass die Steuerung der Beheizung sowie der Beleuchtung über einen Stromleiter vom Zentralsteuergerät erfolgt, wobei die Lösung keine konstruktive Anpassungen des Fahrzeuges, zusätzliche Leiter oder andere Befestigungsmittel erfordert.

### Übersicht der Figuren der Zeichnungen

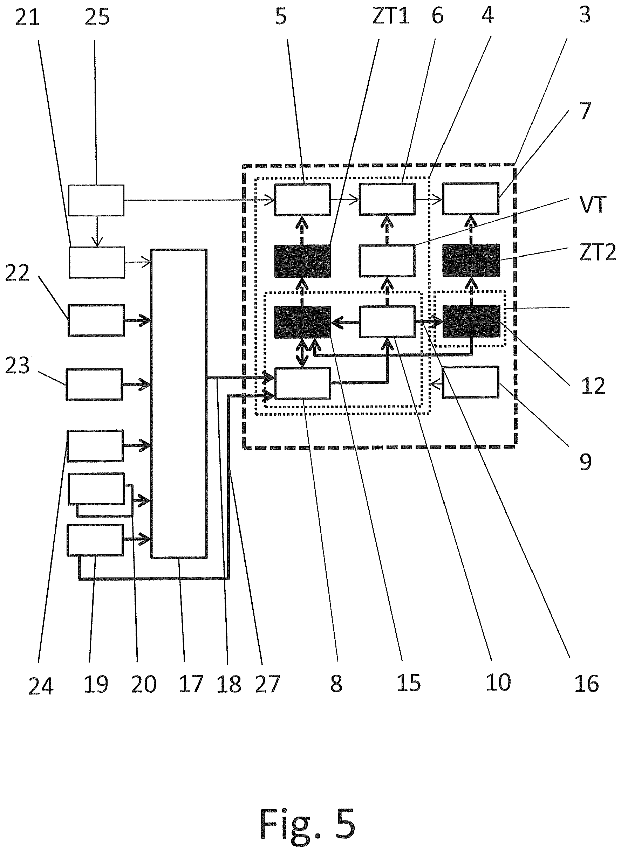

Die Erfindung wird anhand der Ausführungsbeispiele gemäß den beigefügten Zeichnungen näher erläutert, in denen zeigen die Fig. 1 eine perspektivische Ansicht des Kraftfahrzeuges mit geöffnetem Motorraum, die Fig. 2 eine Seitenansicht der modularen Frontscheibenwaschanlage, die Fig. 3 eine perspektivische Ansicht der modularen Frontscheibenwaschanlage, die Fig. 4 eine perspektivische Ansicht der modularen Frontscheibenwaschanlage in einer Schnittdarstellung und die Fig. 5 ein Blockdiagramm der Frontscheibenwaschanlage mit zusammenhängenden Funktionselementen.

### Ausführungsbeispiel der Erfindung

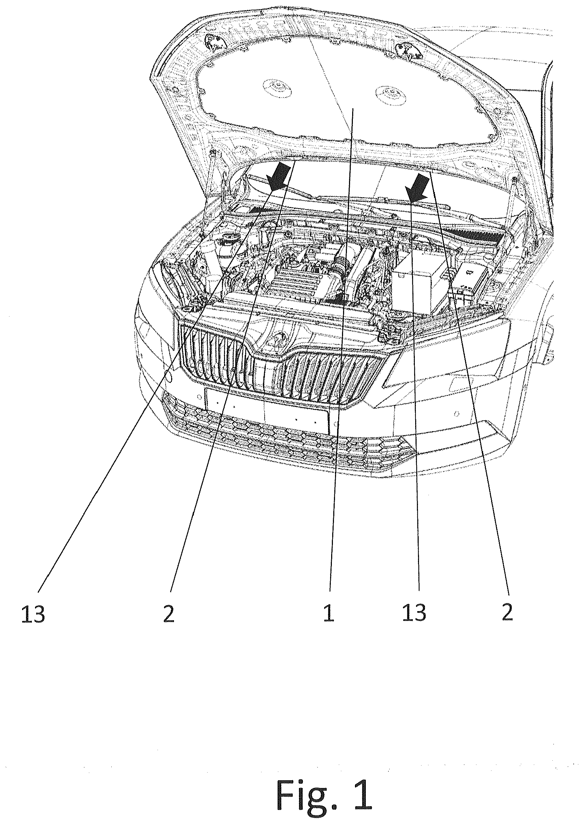

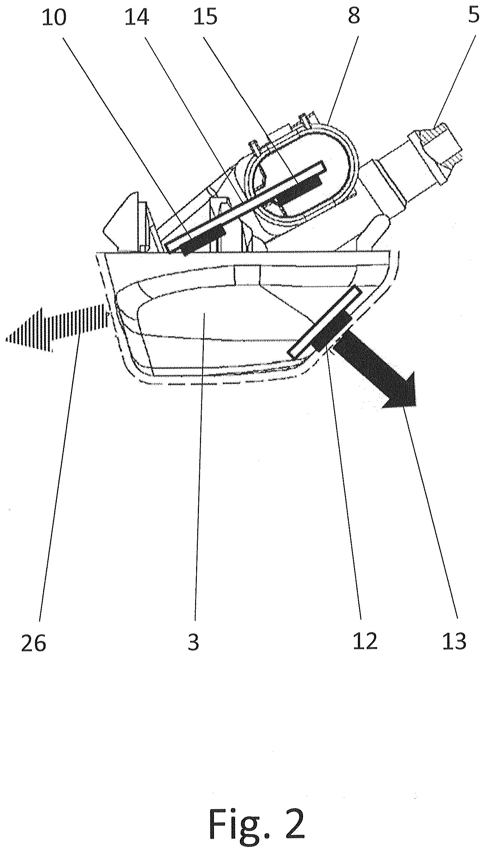

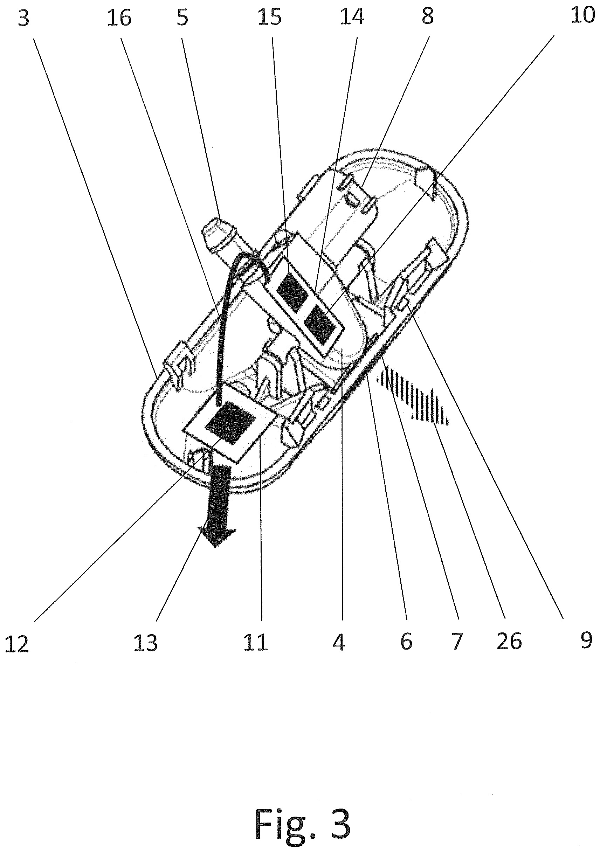

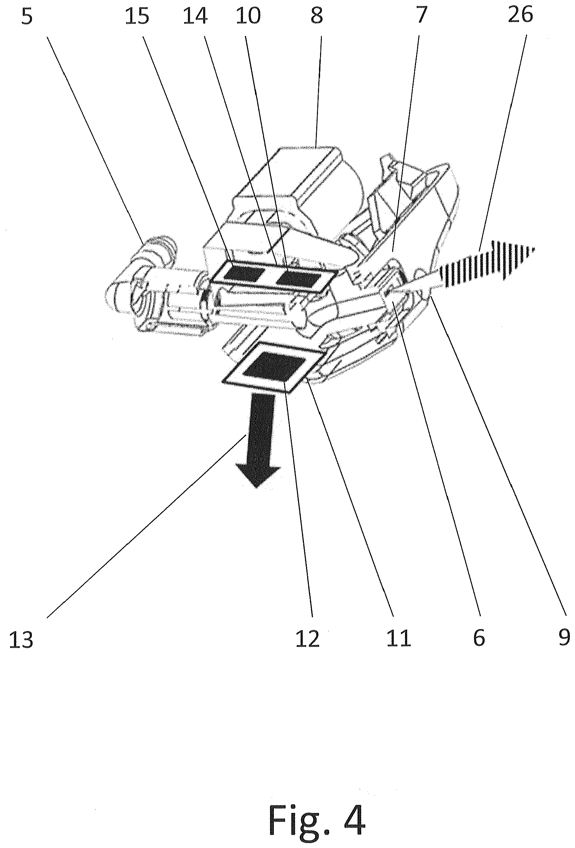

Die Fig. 1 zeigt ein Kraftfahrzeug mit aufgeklappter Motorhaube 1 und geöffnetem Motorraum. An der Innenseite der Motorhaube 1 sind Module einer Frontscheibenwaschanlage angeordnet 2, die in der Regel paarweise eingebaut werden und zur Ansteuerung eines Spritzstrahls 26 auf eine Frontscheibe bestimmt sind. Wie den beigefügten Fig. 2, 3, 4 zu entnehmen ist, besteht das Modul der Frontscheibenwaschanlage 2 aus einem Halter der modularen Frontscheibenwaschanlage 3, aus einem Düsengehäuse 4 mit einstellbarer Neigung, aus einem Wischwassereinlass 5 mit angeschlossenem Zuleitungsschlauch, der zusammen mit den Stromleitern im Fahrzeugkabelstrang geführt wird, aus einer Scheibenwaschdüse 6, deren Auslass durch eine Öffnung 7 im Halter der modularen Frontscheibenwaschanlage 3 bei geschlossener Motorhaube 1 auf die Frontscheibe ausgerichtet ist, ferner aus einem wasserdichten Eingangsstecker 8 mit elektrischen Kontakten, mit denen das Modul der Frontscheibenwaschanlage 2 über einen im Fahrzeugkabelstrang geführten Verbindungsleiter 18 an ein Zentralsteuergerät 17 des Fahrzeuges angeschlossen ist, und aus einer Einstellschraube 9, mit der die Neigung des Düsengehäuses 4 eingestellt wird. Das Modul der Frontscheibenwaschanlage 2 umfasst ferner ein elektrisches Heizelement 10, das die elektrische Beheizung der Scheibenwaschdüse 6 besorgt und vorteilhaft auch bei der Leuchtfunktion genutzt wird. Im Halter der modularen Frontscheibenwaschanlage 3 befindet sich an einem separaten Träger 11 das Beleuchtungselement 12 als Quelle eines weißen Lichtes 13, das bei geöffneter Motorhaube vom Halter der modularen Frontscheibenwaschanlage 3 in den Motorraum hinein gerichtet ist. Das elektrische Heizelement 10 ist am Träger 14 angeordnet, an dem ferner ein elektronisches Element 15 angeordnet ist. Der Träger 14 ist im Düsengehäuse 4 eingekapselt. Das elektronische Element 15 und das Heizelement 10 sind elektrisch verbunden, und zwar einerseits innerhalb des Düsengehäuses 4 mit festen Verbindungen sowohl untereinander, wie auch mit elektrischen Kontakten des Eingangssteckers 8, anderseits nach außen durch einen flexiblen Stromleiter 16 mit dem Beleuchtungselement 12, das an einem separaten Träger 11 im Halter der modularen Frontscheibenwaschanlage 3 angeordnet ist. Der flexible Stromleiter 16 ermöglicht gegenseitige Bewegung des Düsengehäuses 4 gegenüber dem Halter der modularen Frontscheibenwaschanlage 3 bei Einstellung der Neigung der Scheibenwaschdüse 6 mit der Einstellschraube 9. Zum Zentralsteuergerät 17 sind einerseits Betätigungselemente 20 des Fahrzeuges sowie verschiedene weitere Messfühler, wie z.B. Wischwasserstandsfühler 21, Außentemperaturfühler 22, Außenlichtfühler 23, Motorhaubentaster 24 usw. angeschlossen.

Intelligente Steuerung des Moduls der Frontscheibenwaschanlage 2 besorgt das Zentralsteuergerät 17 des Fahrzeuges in Zusammenarbeit mit dem elektronischen Element 15. In diesem Steuergerät ist mittels einer Programmausstattung (SW) und individuellen Einstellungen, die bei der Fahrzeugfertigung in seinen Speicher eingespielt werden (entsprechend der angebotenen Spezifikation des Herstellers und gemäß der Kundennachfrage), das gewünschte Verhalten sowohl der Heizfunktion, wie auch der Funktion der Beleuchtung des Motorraumes eingestellt.

Der Vorteil der vorliegenden Lösung liegt darin, dass zur Realisierung und Steuerung beider Funktionalitäten nur ein bereits vorhandener Steuerausgang sowie ein Verbindungsleiter 18 vom Zentralsteuergerät 17, der bereits zum Eingangsstecker 8 zugeführt ist, und weiter der vorhandene zweite Leiter, und zwar Massepotentialleiter 27, der über die Karosserie zum Minuspol der Autobatterie 19 angeschlossen ist, ausreichen können. Am Fahrzeug müssen keine weitere Stromleiter, Befestigungen, Durchlaufhülsen, Schaltkontakte usw. ergänzt werden.

Entsprechend der Anzahl und den Typen der elektronischen Geber, welche an die Eingänge des Zentralsteuergerätes angeschlossen und im jeweiligen Fahrzeug vorhanden sind, kann sowohl die Funktionalität der Beheizung der Scheibenwaschdüse 6 (z.B. in Abhängigkeit von der Einschaltung einer Zündung, einem Motorlauf, dem Zustand einer Autobatterie 19, der Außentemperatur, der Fahrzeuggeschwindigkeit, des Wischwasserbehälterstandes 25), als auch die Funktionalität der Motorraumbeleuchtung konfiguriert werden. Die Beleuchtung kann z.B. in Abhängigkeit vom Zustand eines Motorhaubentasters 24, eines Außenlichtfühlers 23, der Einstellung eines Lichtschalters und weiterer Fahrzeugzustände konfiguriert werden.

Das Zentralsteuergerät 17 besorgt über einen gemeinsamen Verbindungsleiter 18 einerseits die Stromeinspeisung (für die Beheizung der Scheibenwaschdüse 6 und für den Betrieb des Beleuchtungselementes 12 im Motorraum), anderseits die Steuerungsimpulse, mit denen das Zentralsteuergerät 17 des Moduls der Frontscheibenwaschanlage 2 mit Heiz- und Beleuchtungsfunktion den Betriebsmodus bestimmt, d.h. Aktivierung, Deaktivierung der Beheizung sowie Beleuchtung. Diese Steuerungsimpulse werden vom elektronischen Element 15 ausgewertet, welches die Energie zwischen Beheizung und Beleuchtung aktiv verteilt.

Das elektrische Heizelement 10 erfüllt einerseits seine primäre Funktion, d.h. wandelt die elektrische Energie in Heizwärme VT um, mit der die Scheibenwaschdüse 6 gegen Einfrieren beheizt wird, anderseits wird es sekundär vorteilhaft im Stromkreis des Beleuchtungselementes 12 angewendet, wo es zur Stabilisierung des Betriebes des Beleuchtungselementes 12 und zum Abstrahlen der damit verbundener Abwärme des Beleuchtungselementes ZT2 genutzt.

Die Abwärme ZT1, die bei dem Betrieb vom aktiven elektronischen Element 15 produziert wird, sowie die Abwärme ZT2, die vom Beleuchtungselement 12 produziert wird, welche anderswo unnützliche Wärmeverluste bedeuten würden, werden hier vorteilhaft zur Beheizung des Wischwassers am Einlass 5, in der Scheibenwaschdüse 6 sowie in der Öffnung 7 im Düsengehäuse 4 genutzt.

Bei einer Störung des elektronischen Elementes 15 können sowohl das elektrische Heizelement 10, als auch das Beleuchtungselement 12 weiterhin im Notmodus funktionieren. Bei einer Störung des Beleuchtungselementes 12 kann das elektrische Heizelement 10 weiterhin im Notmodus funktionieren, bei einer Störung des elektrischen Heizelementes 10 ist sowohl die Beheizung, als auch die Beleuchtung außer Funktion gesetzt.
Die genannten Störzustände werden von dem Zentralsteuergerät 18 erkannt und erfasst und können dem Fahrer sowie dem Service bei Fahrzeugdiagnose gemeldet werden.

### Bezugszeichenliste

- 1.: Motorhaube
- 2.: Modul der Frontscheibenwaschanlage
- 3.: Halter der modularen Frontscheibenwaschanlage
- 4.: Düsengehäuse
- 5.: Wischwasseranschluss
- 6.: Scheibenwaschdüse
- 7.: Öffnung
- 8.: Eingangsstecker
- 9.: Einstellschraube
- 10.: elektrisches Heizelement
- 11.: separater Träger
- 12.: Beleuchtungselement
- 13.: weißes Licht
- 14.: Träger
- 15.: elektronisches Element
- 16.: flexibler Stromleiter
- 17.: Zentralsteuergerät
- 18.: Verbindungsleiter
- 19.: Autobatterie
- 20.: Betätigungselemente des Fahrzeuges
- 21.: Wischwasserstandsfühler
- 22.: Außentemperaturfühler
- 23.: Außenlichtfühler
- 24.: Motorhaubentaster
- 25.: Wischwasserbehälter
- 26.: Wischwasserstrahl
- 27.: Massepotentialleiter
- ZT 1: Abwärme des elektronischen Elementes
- ZT 2: Abwärme
- VT: Heizwärme

## Patentansprüche

1. Vorrichtung zur Beleuchtung eines Fahrzeugmotorraumes bestehend aus einem an der Innenseite einer Motorhaube (1) angeordneten und einer Frontscheibe anliegenden Modul einer Frontscheibenwaschanlage (2), das ein Düsengehäuse (4) mit Waschwasseranschluss (5), eine Scheibenwaschdüse (6) umfasst, wo in dem Düsengehäuse (4) ein elektrisches Heizelement (10) der Düse sowie ein elektronisches Element (15), angeordnet sind, die über einen Verbindungsleiter (18) an ein Zentralsteuergerät (17) des Fahrzeuges und über einen Massepotentialleiter (27) an die Fahrzeugkarosserie angeschlossen sind, **dadurch gekennzeichnet, dass** in dem Modul der Frontscheibenwaschanlage (2) ein Beleuchtungselement (12) angeordnet ist.

2. Vorrichtung zur Beleuchtung eines Fahrzeugmotorraumes nach Anspruch 1 **dadurch gekennzeichnet, dass** das Beleuchtungselement (12) über das elektronische Element (15) sowie wenigstens einen Verbindungsleiter (18) an das Fahrzeugzentralsteuergerät (17) und über Massepotentialleiter (27) an die Fahrzeugkarosserie angeschlossen ist.

3. Vorrichtung zur Beleuchtung eines Fahrzeugmotorraumes nach vorgenannten Ansprüchen **dadurch gekennzeichnet, dass** das Beleuchtungselement (12) eine LED-Leuchte bildet.

4. Vorrichtung zur Beleuchtung eines Fahrzeugmotorraumes nach vorgenannten Ansprüchen **dadurch gekennzeichnet, dass** das Beleuchtungselement (12) beim Erfüllen der Leuchtfunktion auch das elektrische Heizelement (10) sowie elektronisches Element (15) nutzt.

5. Vorrichtung zur Beleuchtung eines Fahrzeugmotorraumes nach vorgenannten Ansprüchen **dadurch gekennzeichnet, dass** die Abwärme des elektronischen Elementes (ZT1) und des Beleuchtungselementes (ZT2) bei der Leuchtfunktion auf den Waschwasseranschluss (5) sowie Düsengehäuse (4) wirkt.

## Claims

1. A device for illuminating a vehicle engine compartment consisting of a module of a windshield wiper system (2) arranged on the inside of an engine hood (1) and abutting a windshield, which comprises a nozzle housing (4) with wash water connection (5), a windshield washer nozzle (6), where in the nozzle housing (4) an electrical heating element (10) of the nozzle as well as an electronic element (15) are arranged, which are connected via a connection conductor (18) to a central control unit (17) of the vehicle and via a ground potential conductor (27) to the vehicle body, **characterized in that** in the module of the windshield wiper system (2) an illuminating element (12) is arranged.

2. A device for illuminating a vehicle engine compartment according to Claim 1, **characterized in that** the illuminating element (12) is connected to the vehicle central control unit (17) via the electronic element (15) as well as at least one connection conductor (18) and to the vehicle body via ground potential conductor (27).

3. A device for illuminating a vehicle engine compartment according to any one of the preceding claims, **characterized in that** the illuminating element (12) forms an LED lamp.

4. A device for illuminating a vehicle engine compartment according to any one of the preceding claims, **characterized in that** the illuminating element (12) also uses the electrical heating element (10) as well as electronic element (15) for satisfying the lighting function.

5. A device for illuminating a vehicle engine compartment according to any one of the preceding claims, **characterized in that** the waste heat of the electronic element (ZT1) and of the illuminating element (ZT2) acts in the lighting function on the wash water connection (5) as well as the nozzle housing (4).

## Revendications

1. Dispositif destiné à l'éclairage d'un compartiment moteur de véhicule, composé d'un module d'un système lave-glace du parebrise (2) qui est disposé sur le côté intérieur d'un capot de moteur (1) et adjacent à un parebrise, et qui comprend un boîtier de buse (4) avec raccordement d'eau de lavage (5), une buse de lavage de vitre (6), où un élément chauffant (10) électrique de la buse ainsi qu'un élément (15) électronique sont disposés dans le boîtier de buse (4) et sont connectés à un appareil de commande central (17) du véhicule par le biais d'un conducteur de connexion (18) et à la carrosserie du véhicule par le biais d'un conducteur de potentiel de masse (27), **caractérisé en ce qu'**un élément d'éclairage (12) est disposé dans le module du système lave-glace du parebrise (2).

2. Dispositif destiné à l'éclairage d'un compartiment moteur de véhicule selon la revendication 1, **caractérisé en ce que** l'élément d'éclairage (12) est connecté à l'appareil de commande central (17) par le biais de l'élément (15) électronique ainsi que par le biais d'au moins un conducteur de connexion (18) et est connecté à la carrosserie du véhicule par le biais de conducteurs de potentiel de masse (27).

3. Dispositif destiné à l'éclairage d'un compartiment moteur de véhicule selon des revendications précédentes, **caractérisé en ce que** l'élément d'éclairage (12) forme une lampe LED.

4. Dispositif destiné à l'éclairage d'un compartiment moteur de véhicule selon des revendications précédentes, **caractérisé en ce que,** lors de l'accomplissement de la fonction d'éclairage, l'élément d'éclairage (12) utilise également l'élément chauffant (10) électrique ainsi que l'élément (15) électronique.

5. Dispositif destiné à l'éclairage d'un compartiment moteur de véhicule selon des revendications précédentes, **caractérisé en ce que** la chaleur dégagée par l'élément (ZT1) électronique et par l'élément d'éclairage (ZT2) lors de la fonction d'éclairage agit sur le raccordement d'eau de lavage (5) ainsi que sur le boîtier de buse (4).
